# EUROPÄISCHE PATENTANMELDUNG

(11) **EP 1 457 257 A1**
(43) Veröffentlichungstag der Anmeldung: **15.09.2004**
(21) Anmeldenummer: 04000043.2
(22) Anmeldetag: 03.01.2004
(51) Int. Cl.: B01J 20/32

(54) **Trennmaterial, Säule mit diesem Trennmaterial sowie deren Verwendung zur Reinigung von Proteinen**

(30) Priorität: 16.01.2003 DE 20300703 U
(71) Anmelder: Macherey, Nagel GmbH & Co. Handelsgesellschaft, 52355 Düren (DE)
(72) Erfinder: Radmacher, Edmund, Dr., 52349 Düren (DE); Möller, Klaus, Dr., 52249 Eschweiler (DE); Riering, Helmut, Dr., 50169 Kerpen-Brüggen (DE)
(74) Vertreter: Paul, Dieter-Alfred, Dipl.-Ing.

(57) **Zusammenfassung**

Die Erfindung betrifft ein Trennmaterial für die Reinigung von His-Tag-Proteinen durch die Einführung von Alkylsubstituenten in ein TED-Molekül, gegebenenfalls durch den Einsatz von Trägermaterialien mit einer mittleren Porenweite von > 10⁻⁷ m (1000 A^{o}).

## Beschreibung

Die vorliegende Erfindung betrifft ein Trennmaterial, eine Säule mit diesem Trennmaterial sowie dessen bzw. deren Verwendung für die Reinigung von His-Tag-Proteinen.

Das Trennmaterial wird bei der immobilisierten Metallionen-Affinitäts-Chromatographie (IMAC) eingesetzt. Das Prinzip beruht auf der reversiblen Bindung bestimmter Aminosäuren, wie Histidin, Tryptophan, Tyrosin oder Phenylalanin, an immobilisierten Metallionen, wie Co²⁺ oder Ni²⁺. Die Immobilisierung erfolgt über eine chelatisierende Gruppe, die kovalent mit einem Trägermaterial verbunden ist. Die Bindung zwischen Aminosäureresten eines Proteins und den Metallionen kann durch Absenkung des pH-Wertes oder durch eine Verdrängungsreaktion mit Imidazol aufgehoben werden. Die IMAC hat sich zu einer der wichtigsten Methoden zur Reinigung von rekombinanten Proteinen entwickelt, die am N- oder C-Terminus mit einem Polyhistidin-Peptid fusioniert sind. Man spricht daher von Polyhistidin-Fusionsproteinen. Es existiert eine Vielzahl von Polyhistidin-Peptiden, die sich in der Anzahl und Anordnung der Histidinreste und damit in der Affinität zu dem IMAC-Trennmaterial unterscheiden, z.B. (H)ₙ, (H-X)ₙ, (H-X₃-H)ₙ, wobei H für Histidin steht und X irgendeine Aminosäure sein kann.

Zur Immobilisierung der Metallionen werden verschiedene chelatisierende Gruppen verwendet, wie z.B. Iminodiessigsäure (IDA), Nitrilotriessigsäure (NTA), carboxymethyliertes Aspartat (CM-Asp) und Tris(carboxymethyl)ethylendiamin (TED). Zweiwertige Metallionen werden von der IDA-Gruppe über drei koordinative Bindungen festgehalten, entsprechend spricht man von einem dreizähnigen Liganden. Der Chelat-Komplex hat zwei Koordinationsstellen übrig, um die Seitenkette einer Aminosäure, wie z.B. Histidin, zu binden. Da die Metallionen relativ schwach gebunden werden, können diese leicht ausgewaschen werden - dieses Phänomen bezeichnet man als "Metal-Leaching". Der Verlust an Metallionen führt zu einer verringerten Bindungskapazität und kann zu Problemen bei Folgeapplikationen führen.

NTA und CM-Asp binden Metallionen über vier Koordinationsstellen und stellen somit vierzähnige Liganden dar. Wegen der festeren Bindung kommt es zu einer verringerten, aber noch problematischen Auswaschung von Metallionen.

Bei Tris(carboxymethyl)ethylendiamin (TED) handelt es sich um einen fünfzähnigen Liganden, der Metallionen über fünf Koordinationsstellen bindet (Porath, J. und Olin, B. 1983, Biochemistry 22:1621-1630):

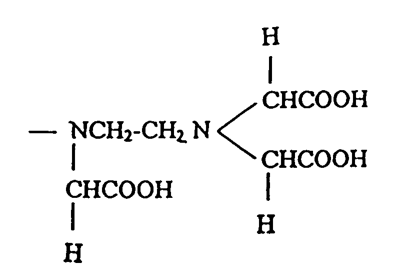

Die mit den Metallionen, insbesondere Ni²⁺-Ionen, gebildeten Metall-Chelatkomplexe sind äußerst stabil, so daß die Metallionen praktisch nicht ausgewaschen werden. Da nur eine Koordinationsstelle zur Bindung des Proteins zur Verfügung steht, besitzen TED-Phasen eine geringe Affinität zu den entsprechenden Proteinen. Dies führt zu einer höheren Selektivität und damit zu einer geringen Bindungskapazität für Proteine.

Die chelatisierenden Gruppen werden über einen _{"}Spacer" an Trägermaterialien gebunden. Als Trägermaterialien bieten sich insbesondere Weichgel-Trägermaterialien, wie Agarose, oder formstabile Trägermaterialien, wie hochvernetzte Polymermaterialien oder Kieselgele, an. Es werden ausschließlich Trägermaterialien mit einer mittleren Porenweite (Porendurchmesser) von maximal 8 x 10⁻⁸ m eingesetzt, da Trägermaterialien mit einer größeren mittleren Porenweite als 8 x 10⁻⁸ m dafür angesehen werden, niedrige Bindungskapazitäten für Proteine zu haben. Figueroa, A., Corradini, C., Feibush, B. und Karger, B.L. 1986, Journal of Chromatography 371:335-52, schlagen beispielweise vor, Trägermaterialien mit einer mittleren Porenweite von 3 x 10⁻⁸ m (300 Å) einzusetzen. Nachteilig ist, daß Trennmaterialien auf der Basis solcher Trägermaterialien häufig eine nicht zufriedenstellende Bindungskapazität für Proteine, insbesondere für große rekombinante Proteine, aufweisen.

Aufgabe der vorliegenden Erfindung ist es, ein Trennmaterial insbesondere für die immobilisierte Metallionenaffinitäts-Chromatographie (IMAC) bereitzustellen, welches eine verbesserte Bindungskapazität für Proteine, insbesondere für große rekombinante Proteine, aufweist, außerdem eine hohe Selektivität bezüglich der Proteine hat und ein geringes _{"}Metall-Leaching" aufweist.

Die erfindungsgemäße Lösung dieser Aufgabe ist ein Trennmaterial für die Reinigung von His-Tag-Proteinen, welches einen porösen Träger enthält, an dem gemäß der nachfolgenden allgemeinen Formel I eine chelatisierende Gruppierung gebunden ist, 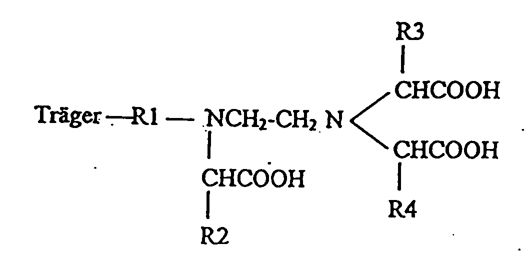 wobei R1 eine 1-20 C-Atome enthaltende verzweigte oder unverzweigte Alkylgruppe, eine 1-20 C-Atome enthaltende Aralkylgruppe, eine 1-20 C-Atome enthaltende Arylgruppe oder eine 1-20 C-Atome sowie mindestens eines der Elemente N, S, O, P enthaltende Heteroarylgruppe ist, R2, R3 und R4 gleich oder verschieden sind, sowie für Wasserstoff, für 1-20 C-Atome enthaltende verzweigte oder unverzweigte Alkylgruppen, für 1-20 C-Atome enthaltende Aralkylgruppen und/oder für 6-18 Ringatome enthaltende Arylgruppen stehen und der Träger eine mittlere Porenweite (Porendurchmesser) von größer als 10⁻⁷ m (1000 Å) hat.

Die Erfindung beruht auf der Feststellung, daß die Bindungskapazität der Trennmaterialien für Proteine, insbesondere für große rekombinante Proteine, durch die Einführung von Alkylsubstituenten in das TED-Molekül und durch den Einsatz von Trägermaterialien mit einer mittleren Porenweite von größer als 10⁻⁷ m (1000 Å) verbessert werden. Dies ist insofern überraschend, da selbst voluminöse Proteine, wie z.B. das rekombinante GFP-Protein, welches bei zylindrischer Form lediglich eine Höhe von 4,2 x 10⁻⁹ m (42 Å) und einen Durchmesser von 2,4 x 10⁻⁹ m (24 Å) aufweist, ohne weiteres auch in Poren eindringen können, welche deutlich kleiner als 10⁻⁷ m (1000 Å) sind. Folglich wäre eigentlich zu erwarten gewesen, daß sich mit einer Vergrößerung der Poren die Zugänglichkeit der Poren für Proteine keinesfalls erhöht und daher sich die Bindungskapazität nicht verbessert, sondern bedingt durch die kleinere Oberfläche sogar verschlechtern sollte.

Die Aufgabe wird aber auch durch ein Trennmaterial für die Reinigung von His-Tag-Proteinen gelöst, welches einen porösen Träger enthält, an dem gemäß der nachfolgenden allgemeinen Formel II eine chelatisierende Gruppierung gebunden ist, 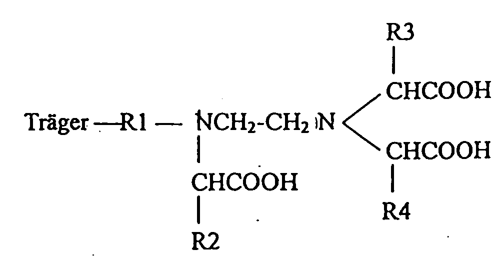 wobei R1 eine 1-20 C-Atome enthaltende verzweigte oder unverzweigte Alkylgruppe, eine 1-20 C-Atome enthaltende Aralkylgruppe, eine 1-20 C-Atome enthaltende Arylgruppe oder eine 1-20 C-Atome sowie mindestens eines der Elemente N, S, O, P enthaltende Heteroarylgruppe ist, R2, R3 und R4 gleich oder verschieden sind und für Wasserstoff, für 1-20 C-Atome enthaltende verzweigte oder unverzweigte Alkylgruppen, für 1-20 C-Atome enthaltende Aralkylgruppen und/oder für 6-18 Ringatome enthaltende Arylgruppen mit der Maßgabe stehen, daß maximal zwei der Reste R2, R3 und R4 als Wasserstoff vorliegen.

Die durch die Erfindung gewährleistete höhere Bindungskapazität hat den Vorteil, daß bei gleicher Ausbeute gegenüber dem Stand der Technik wesentlich geringere Mengen an Trennmaterial notwendig sind, wodurch ein kostengünstigeres Reinigungsverfahren ermöglicht wird. Außerdem zeichnet sich das Trennmaterial durch hohe Selektivität mit der Folge aus, daß ein Zielprotein mit hoher Reinheit erhalten wird. Unspezifische Bindungen werden unterdrückt und Fremdproteine entsprechend effektiv abgereichert.

Die Länge des für R2, R3 und/oder R4 stehenden Alkylsubstituenten bestimmt maßgeblich die Affinität zwischen der chelatisierenden Gruppierung und den zu reinigenden Proteinen. Proteine, die aufgrund einer geringen Affinität zum TED-Standardmaterial schlecht gebunden werden, können durch geeignete Auswahl der Alkylgruppen in hoher Ausbeute gereinigt werden. Das erfindungsgemäße Trennmaterial eignet sich insbesondere zur effektiven Reinigung von rekombinanten His-Tag-Proteinen.

Die mittleren Porenweiten wurden mit Hilfe der Quecksilber-Porosimetrie (Porotec GmbH, Hofheim) bestimmt, wobei die Porenweitenverteilung mit Hilfe der Washburn-Gleichung ermittelt wurde (E.W. Washburn, Proc. Natl. Acad. Sci. USA, 1992. 7:115).

In einer bevorzugten Ausführungsform der Erfindung hat das Trägermaterial eine mittlere Porenweite von größer als 1,2 x 10⁻⁷ m (1200 Å). Besonders bevorzugt sind jedoch mittlere Porenweiten von 1,2 x 10⁻⁷ bis 2 x 10⁻⁷ m (von 1200 bis 2000 Å).

- R1 - kann beispielsweise 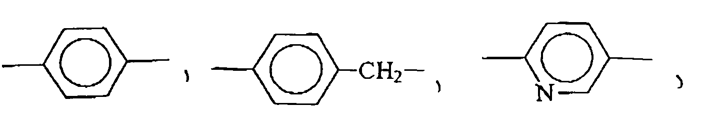 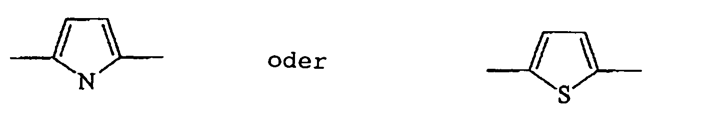 darstellen. Bevorzugt liegt entweder R2, R3 und/oder R4 als Alkylsubstituent vor.

In der Regel handelt es sich bei R2, R3 und R4 jeweils um den gleichen Substituenten. R2, R3 und R4 können als Methyl-, Ethyl-, n-Propyl, i-Propyl-, n-Butyl, Isobutyl-, Oktyl- oder Octadecylgruppe vorliegen.

Allerdings ist es auch möglich, daß R2, R3 und R4 als Aryl und/oder Aralkylgruppen wie Phenyl oder Benzylgruppen vorliegen.

Zweckmäßigerweise werden druck- und formstabile Trägermaterialien eingesetzt, welche die Vorteile haben, daß diese leicht und reproduzierbar abfüllbar sind, daß diese in den entsprechenden Chromatographiesäulen ein stabiles Bett ausbilden, daß diese in trockener Form lagerstabil sind und daß diese sich aufgrund ihrer stabilen Porenstruktur und Partikelform schnell und ohne Volumenänderung äquilibrieren. Ein stabiles Bett der Trägerpartikel bietet den Vorteil, daß die rekombinanten Proteine während der Chromatographie bei ihrem Weg durch die Säule mit besonders vielen Bindungsstellen in Kontakt geraten. Aus diesem Grund reicht bei der Chromatographie ein langsamer Fluß durch das Trennmaterial aus, um eine optimale Bindung der rekombinanten Proteine an das Trägermaterial zu gewährleisten. Als druck- und formstabile Trägermaterialien werden insbesondere anorganische Materialien, wie Silicamaterial, insbesondere Kieselgel, eingesetzt. Alternativ dazu kommen jedoch auch organische Materialien, wie vernetzte Polymere, in Frage. Diese Polymere können beispielsweise als Polystyrol-Divinylharze oder Methacrylatharze vorliegen.

Die Erfindung wird nachstehend anhand von Ausführungsbeispielen unter Bezugnahme auf die beiliegende Zeichnung näher erläutert. In der Zeichnung zeigt:
- Figur 1: ein Säulendiagramm, in dem die an erfindungsgemäßem Trennmaterial und die an Trennmaterial nach dem Stand der Technik gebundene Proteinmasse in Abhängigkeit von der Porengröße des jeweiligen Trennmaterials dargestellt ist,
- Figur 2: ein Säulendiagramm, welches die an erfindungsgemäßem Trennmaterial und die an Trennmaterial nach dem Stand der Technik gebundene Proteinmasse darstellt,

- Figur 3: ein Säulendiagramm, welches die Masse an gebundenem Protein in Abhängigkeit von verschiedenen erfindungsgemäßen Trennmaterialien des "TED-Typs" darstellt und
- Figur 4: ein Säulendiagramm, welches die Masse des an Trennmaterial gebundenen Polymers in Abhängigkeit von der Größe des eingesetzten Säulenbetts am Beispiel von zwei verschiedenen erfindungsgemäßen Trennmaterialien des _{"}TED-Typs" darstellt.

### Beispiel 1:

### Bindung der Vorstufe der chelatisierenden Gruppierung an den Träger - Umsetzung von Kieselgel mit 3-(2-Aminoethylamino)propyltrimethoxysilan

100 g Kieselgel mit einer mittleren Porenweite von 1,5 x 10⁻⁷ m (1500 Å) (alternativ 2,4 x 10⁻⁸ m (240 Å) und einer Partikelgröße von 50 µm (alternativ 20 und 120 µm) werden in 400 ml absolutem Xylol suspendiert. Man fügt 20 ml 2-Aminoethylaminopropyltrimethoxysilan hinzu und erhitzt 16 h zum Sieden. Das Kieselgel wird abfiltriert, mit Methylenchlorid, Methanol und Wasser gewaschen sowie anschließend getrocknet.

### Beispiel 2:

### Ausbildung der immobilisierten chelatisierenden Gruppierung gemäß Formel I mit (R1 = -CH₂-CH₂-CH₂-), R2 = R3 = R4 = H - Umsetzung des Kieselgels aus Beispiel 1 mit Bromessigsäure - Herstellung des Trennmaterials Ni-TED-Silika-E

100 g 3-(2-Aminoethylamino)propyltrimethoxysilanmodifiziertes Kieselgel aus Beispiel 1 und 24 g Natriumiodid werden in 600 ml Methanol eingerührt. Man fügt eine Lösung von 42,4 g 2-Bromessigsäure und 12,2 g Natriumhydroxid in 20 ml Wasser hinzu und erhitzt 16 h zum Sieden. Das Kieselgel wird abfiltriert und mit Methylenchlorid, Methanol, Wasser, 0,1 M Nickelsulfatlösung und Wasser gewaschen.

### Beispiel 3:

### Ausbildung der immobilisierten chelatisierenden Gruppierung gemäß Formel II mit (R1 = -CH₂-CH₂-CH₂-), R2 = R3 = R4 = CH₃ - Umsetzung des Kieselgels aus Beispiel 1 mit 2-Propionsäure - Herstellung des Trennmaterials Ni-TED-Silika-P

100 g 3-(2-Aminoethylamino)propyltrimethoxysilanmodifiziertes Kieselgel aus Beispiel 1 und 24 g Natriumiodid werden in 600 ml Methanol eingerührt. Man fügt eine Lösung von 46,7 g 2-Brompropionsäure und 12,2 g Natriumhydroxid in 20 ml Wasser hinzu und erhitzt 16 Stunden zum Sieden. Das Kieselgel wird abfiltriert und mit Methylenchlorid, Methanol, Wasser, 0,1 M Nickelsulfatlösung und Wasser gewaschen.

### Beispiel 4:

### Ausbildung der immobilisierten chelatisierenden Gruppierung gemäß Formel II mit (R1 = -CH₂-CH₂-CH₂-), R2 = R3 = R4 = CH₂-CH₃ - Umsetzung des Kieselgels aus Beispiel 1 mit 2-Brombutansäure - Herstellung des Trennmaterials Ni-TED-Silika-B

100 g 3-(2-Aminoethylamino)propyltrimethoxysilanmodifiziertes Kieselgel aus Beispiel 1 und 24 g Natriumiodid werden in 600 ml Methanol eingerührt. Man fügt eine Lösung von 51,0 g 2-Brombutansäure und 12,2 g Natriumhydroxid in 20 ml Wasser hinzu und erhitzt 16 Stunden zum Sieden. Das Kieselgel wird abfiltriert und mit Methylenchlorid, Methanol, Wasser, 0,1 M Nickelsulfatlösung und Wasser gewaschen.

### Beispiel 5:

### Ausbildung der immobilisierten chelatisierenden Gruppierung gemäß Formel II mit (R1 = -CH₂-CH₂-CH₂-), R2 = R3 = R4 = CH₂-CH₂-CH₃- Umsetzung des Kieselgels aus Beispiel 1 mit 2-Bromcapronsäure - Herstellung des Trennmaterials Ni-TED-Silika-H

100 g 3-(2-Aminoethylamino)propyltrimethoxysilanmodifi ziertes Kieselgel aus Beispiel 1 und 24 g Natriumjodid werden in 600 ml Methanol eingerührt. Man fügt eine Lösung von 59,5 g 2-Bromcapronsäure und 12,2 g Natriumhydroxid in 20 ml Wasser hinzu und erhitzt 16 Stunden zum Sieden. Das Kieselgel wird abfiltriert und mit Methylenchlorid, Methanol, Wasser, 0,1 M Nickelsulfatlösung und Wasser gewaschen.

### Beispiel 6:

### Bindung von Polyhistidin-Fusionsproteinen an IMAC-Trennmaterialien mit unterschiedlicher Porengröße

Die Kammern einer 96-Kammer-Filtrationseinheit wurden mit folgenden Trennmaterialien befüllt:
- 75 mg des gemäß Beispiel 2 gewonnenen Ni-TED-Silica-E mit einer mittleren Porenweite von 5 x 10⁻⁷ m (1500 Å) und einem Partikeldurchmesser von 50 µm
- 75 mg des gemäß Beispiel 2 gewonnenen Ni-TED-Silica-E mit einer mittleren Porenweite von 2,4 x 10⁻⁸ m (240 Å) und einem Partikeldurchmesser von 50 µm
- 75 mg Ni-TED-Silica von Active Motif mit einer mittleren Porenweite von 7,8 x 10⁻⁸ m (780 Å) und einem Partikeldurchmesser von 50 µm.

Die Filtrationseinheit wurde auf eine Vakuumkammer (Macherey-Nagel) plaziert, um die im folgenden genannten Lösungen durch das Trennmaterial zu saugen. Das Trennmaterial wurde mit 2 ml Puffer (50 mM Tris-HC1, 300 mM NaCl, pH 8) äquilibriert und mit einem geklärten Escherichia coli-Lysat, das das rekombinante Protein 6xHN-GFPuv enthielt, beladen. Bei dem rekombinanten Protein 6xHN-GFPuv handelt es sich um eine Variante des "Green Fluorescent Protein", das mit einem sechs Histidin enthaltenden Peptid (6xHN, BD Clontech) fusioniert ist. Während des Durchsaugens des Lysats durch das Chromatographiebett erfolgte die Bindung des Proteins an das Trennmaterial. Die Menge des Histidin-markierten _{"}Green Fluorescent Proteins" im klaren Lysat und im Durchfluß wurde mittels Fluoreszenzmessung (Anregung: 360 nm, Emission: 530 nm) bestimmt. Durch Subtraktion der Werte für den Durchfluß und für das Lysat erhält man die Menge des _{"}Green-Fluorescent Proteins", das an das Trennmaterial gebunden hat.

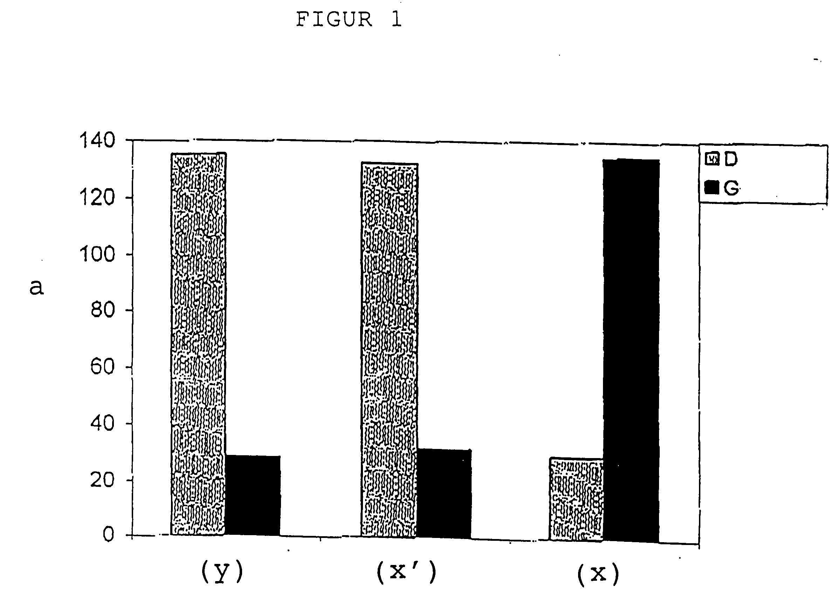

Die Versuchsergebnisse sind in Figur 1 veranschaulicht. Sie zeigt die Masse des an Ni-TED-Silica gebundenen Proteins 6xHN-GFPuv in Abhängigkeit von der mittleren Porenweite des Trennmaterials. Dabei steht a für µg 6xHN-GFPuv, y für Ni-TED-Silica 780 Å (Active Motif), x' für Ni-TED-Silica-E 240 Å gemäß Beispiel 2, x für Ni-TED-Silica-E 1500 Å gemäß Beispiel 2, D für Durchfluß und G für gebunden.

An die Vergleichstrennmaterialien nach dem Stand der Technik, Ni-TED-Silica, mit einer mittleren Porenweite 2,4 x 10⁻⁸ m (240 Å) und Ni-TED-Silica mit einer mittleren Porenweite von 7,8 x 10⁻⁸ m (780 Å) Active Motif binden nur 30 µg (18 %) der aufgetragenen Proteinmenge (165 µg). Im Gegensatz dazu werden von dem erfindungsgemäßen Trennmaterial (Ni-TED-Silica-E), das eine mittlere Porenweite von 1,5 x 10⁻⁷ m (1500 Å) aufweist, 135 µg (82 %) gebunden. Dies ist im Vergleich zu der an dem kleinporigen Trennmaterial nach dem Stand der Technik gebundenen Proteinmasse ungefähr die 4,5-fache Menge. Das Experiment zeigt, daß durch die Erhöhung der mittleren Porenweite von 7,8 x 10⁻⁸ m (780 Å) auf 1,5 x 10⁻⁷ m (1500 Å) ein enormer Anstieg der Bindekapazität erreicht werden kann.

### Beispiel 7:

### Bindung von Polyhistidin-Fusionsproteinen an Agarose- und Kieselgelbasierende IMAC-Trennmaterialien

Der Versuch wurde wie in Beispiel 6 beschrieben durchgeführt, wobei folgende Trennmaterialien eingesetzt wurden:
- 75 mg des gemäß Beispiel 2 gewonnenen Ni-TED-Silica-E mit einer mittleren Porenweite von 1,5 x 10⁻⁷ m (1500 Å) und einem Partikeldurchmesser von 50 µm.
- 100 µl (Bettvolumen, entsprechend ca. 100 mg) Ni-NTA-Superflow von Qiagen, welches ein Weichgel aus Agarose mit einem Partikeldurchmesser von 80 µm ist.

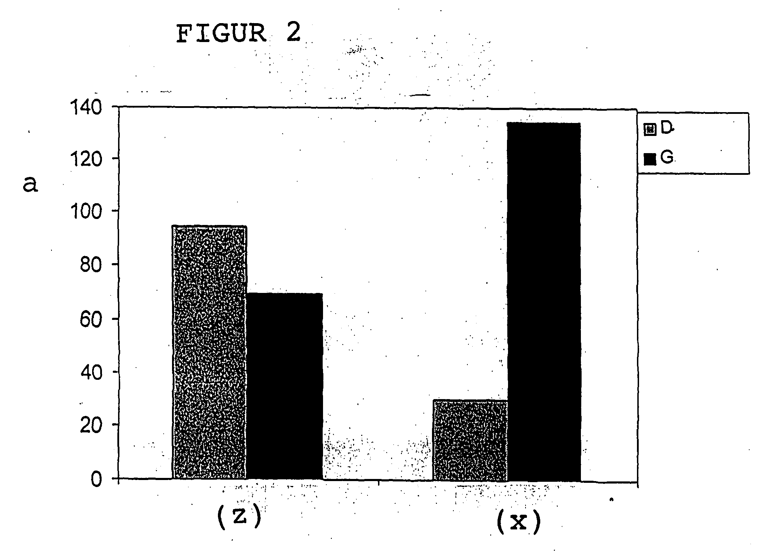

Das Ergebnis dieser Untersuchung ist in Figur 2 dargestellt. Sie zeigt die an den Trennmaterialien Ni-TED-Silica und Ni-NTA-Superflow gebundenen Massen des Proteins 6xHN-GFPuv, wobei a für µg 6xHN-GFPuv, z für Ni-NTA Superflow (Qiagen), x für Ni-TED-Silica-E, 1500 Å, D für Durchfluß und G für gebunden steht.

Das Weichgel-Trägermaterial Ni-NTA-Suprflow (Qiagen) bindet 70 µg des rekombinanten Proteins, beachtliche 95 µg gelangen in den Durchfluß (aufgetragene Menge 165 mg). Im Gegensatz dazu wird von dem erfindungsgemäßen Hartgelmaterial Ni-TED-Silica-E mit einer mittleren Porenweite von 1,5 x 10⁻⁷ m (1500 Å) fast die doppelte Menge gebunden (135 µg). Dieses Beispiel zeigt, daß beim Einsatz des Weichgels ein langsamer Durchfluß durch die Chromatographiesäule für eine optimale Proteinbindung an das Trennmaterial nicht ausreichend ist. Eine bessere Proteinbindung kann nur durch aufwendiges Schütteln oder wiederholtes Resuspendieren erreicht werden. Dies zeigt, daß der Einsatz von Hartgel-Trägermaterialien gegenüber Weichgel-Trägermaterialien vorteilhaft ist.

### Beispiel 8:

### Bindung von Polyhistidin-Fusionsproteinen an IMAC Trennmaterialien mit TED und TED-Modifikationen als chelatisiererende Gruppe

Der Versuch wurde gemäß Beispiel 6 durchgeführt, wobei jeweils 100 mg der in den Beispielen 2 - 5 synthetisierten Trennmaterialien Ni-TED-Silica (E, P, B und H), welche einen Porendurchmesser von 1,5 x 10⁻⁷ m (1500 Å) und eine Partikelgröße von 50 µm hatten, eingesetzt wurden. Als rekombinantes Protein wurde das "Green Fluorescent Protein" mit einem HAT-Polyhistidin-Peptid (BD Clontech) verwendet. Dieses Peptid enthält sechs Histidine zwischen denen jeweils ein bis drei weitere Aminosäuren eingefügt sind. Das HAT-Peptid weist im Gegensatz zum 6xHN-Peptid (Beispiele 6, 7) eine geringere Affinität zu TED-Trennmaterialien auf.

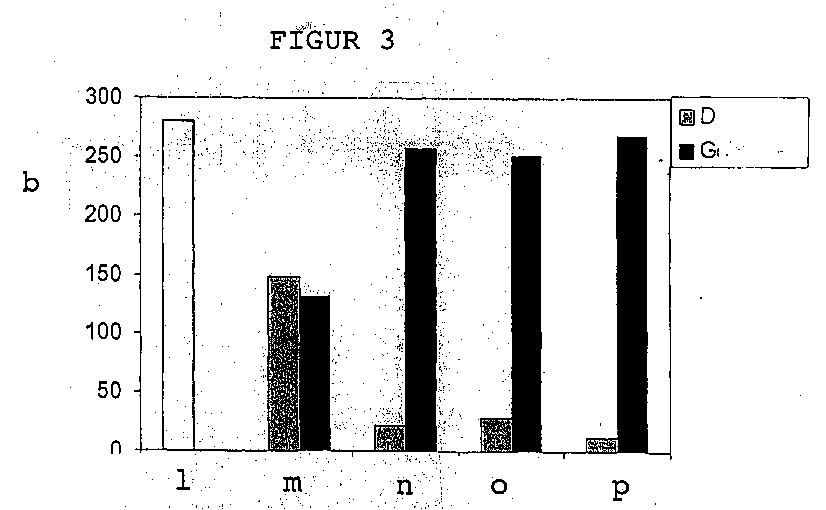

Das Ergebnis des Versuchs ist in Figur 3 dargestellt. Sie zeigt die an Ni-TED-Silica Trägermaterial und dessen Modifikationen gebundene Menge des Proteins HAT-GFPuv. In Figur 3 steht b für µg HAT-GFPuv, l für Lysat, m für Ni-TED-Silica-E, n für Ni-TED-Silica-P, o für Ni-TED-Silica-B, p für Ni-TED-Silica-H, D für Durchfluß und g für gebunden.

Das Trennmaterial Ni-TED-Silica-E bindet nur 130 µg (47 %) der aufgenommenen Proteinmenge (280 µg), wobei 150 µg (53 %) in den Durchfluß gelangen. Im Gegensatz dazu sind im Durchfluß der Trennmaterialien Ni-TED-Silica-P, B und H nur 4 bis 10 % des Proteins nachweisbar. Entsprechend erhöht sich der Anteil des gebundenen Proteins auf 92 bis 96 %. Dieser Versuch zeigt, daß die Trennmaterialien mit den modifizierten TED-Gruppen (Ni-TED-P, -B, -H) eine deutlich höhere Affinität zum Protein aufweisen als das Material mit der unveränderten TED-Gruppe (Ni-TED-Silica-E). Diese modifizierten TED-Gruppen sind folglich besonders gut für die Anbindung von Polyhistidin-Fusionsproteinen geeignet, die, wie in diesem Beispiel gezeigt, nur sehr schlecht an die Standard-TED-Gruppe binden.

### Beispiel 9:

### Bindung von Polyhistidin-Fusionsproteinen an IMAC-Trennmaterialien mit TED und TED-Modifikationen als chelatisierende Gruppe in Abhängig von der Größe des Säulenbetts

Der Versuch wurde gemäß Beispiel 6 durchgeführt, wobei Ni-TED-Silica-E und Ni-TED-Silica-P in unterschiedlichen Mengen (150, 120, 90, 60 mg) eingesetzt wurden [mittlere Porenweite 1,5 x 10⁻⁷ m (1500 Å), Partikelgröße 50 µm]. Das Bakterienlysat enthielt 380 µg des rekombinanten 6xHN-GFPuv-Proteins.

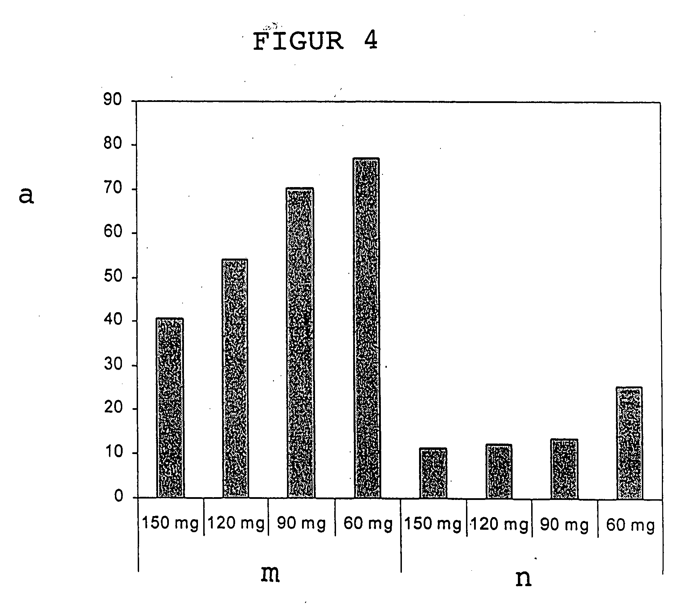

Das Ergebnis dieses Versuchs ist in Figur 4 dargestellt. Sie zeigt die bei Verwendung der Trennmaterialien Ni-TED-Silica-E und -P nicht gebundene Menge des Proteins 6xHN-GVPuv im Durchfluß in Abhängigkeit von der Größe des Säulenbetts, wobei a für µg 6xHN-GFPuv, m für Ni-TED-Silica-E und n für Ni-TED-Silica-P steht.

Bei dem Einsatz des Trennmaterials Ni-TED-Silica-E führt die Verringerung der eingesetzten Menge an Trennmaterial von 150 auf 60 mg fast zu einer Verdoppelung des Anteils an nicht gebundenem Protein im Durchfluß. Im Gegensatz dazu sind bei dem Einsatz des Trägermaterials Ni-TED-Silica-P, welches eine modifizierte TED-Gruppe aufweist, die Verluste im Durchfluß äußerst gering. Dieser Versuch zeigt, daß das Trennmaterial mit der modifizierten TED-Gruppe eine größere Bindungskapazität aufweist als das Standard-TED-Material, so daß mit weniger Trennmaterial gearbeitet werden kann.

## Patentansprüche

1. Trennmaterial für die Reinigung von His-Tag-Proteinen, welches einen porösen Träger enthält, an dem gemäß der nachfolgenden allgemeinen Formel I eine chelatisierende Gruppierung gebunden ist, 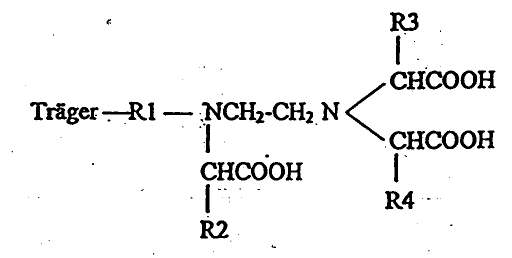 wobei R1 eine 1-20 C-Atome enthaltende verzweigte oder unverzweigte Alkylgruppe, eine 1-20 C-Atome enthaltende Aralkylgruppe, eine 1-20 C-Atome enthaltende Arylgruppe oder eine 1-20 C-Atome sowie mindestens eines der Elemente N, S, O, P enthaltende Heteroarylgruppe ist,
R2, R3 und R4 gleich oder verschieden sind sowie für Wasserstoff, für 1-20 C-Atome enthaltende verzweigte oder unverzweigte Alkylgruppen, für 1-20 C-Atome enthaltende Aralkylgruppen, und/oder für 6-18 Ringatome enthaltende Arylgruppen stehen
und der Träger eine mittlere Porenweite von größer als 10⁻⁷ m (1000 Å) hat.

2. Trennmaterial nach Anspruch 1, **dadurch gekennzeichnet, daß** das Trägermaterial eine mittlere Porenweite von größer als 1,2 x 10⁻⁷ m (1200 Å) aufweist.

3. Trennmaterial nach Anspruch 1 oder 2, **dadurch gekennzeichnet, daß** das Trägermaterial eine mittlere Porenweite von 1,2 x 10⁻⁷ (1200 Å) bis 2 x 10⁻⁷ m (2000 Å) aufweist.

4. Trennmaterial für die Reinigung von His-Tag-Proteinen, welches einen porösen Träger enthält, an dem gemäß der nachfolgenden allgemeinen Formel II eine chelatisierende Gruppierung gebunden ist, 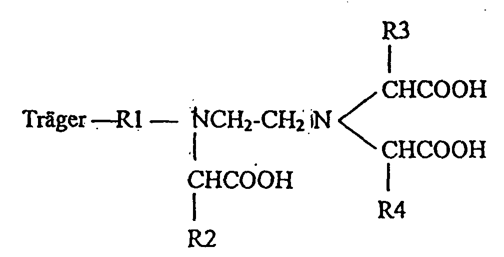 wobei R1 eine 1-20 C-Atome enthaltende verzweigte oder unverzweigte Alkylgruppe, eine 1-20 C-Atome enthaltende Aralkylgruppe, eine 1-20 C-Atome enthaltende Arylgruppe oder eine 1-20 C-Atome sowie mindestens eines der Elemente N, S, O, P enthaltende Heteroalkylgruppe ist,
R2, R3 und R4 gleich oder verschieden sind und für Wasserstoff, für 1-20 C-Atome enthaltende verzweigte oder unverzweigte Alkylgruppen, für 1-20 C-Atome enthaltende Aralkylgruppen und/oder für 6-18 Ringatome enthaltende Arylgruppen mit der Maßgabe stehen, daß maximal zwei der Reste R2, R3 und R4 als Wasserstoff vorliegen.

5. Trennmaterial nach einem der vorhergehenden Ansprüche, **dadurch gekennzeichnet, daß** es sich bei R2, R3 und R4 jeweils um den gleichen Substituenten handelt.

6. Trennmaterial nach einem der vorhergehenden Ansprüche, **dadurch gekennzeichnet, daß** R2, R3 und R4 als Methyl-, Ethyl-, n-Propyl, i-Propyl-, n-Butyl-, Isobutyl-, Oktyl- oder Octadecylgruppe vorliegen.

7. Trennmaterial nach einem der vorhergehenden Ansprüche, **dadurch gekennzeichnet, daß** der Träger ein anorganisches Material ist.

8. Trennmaterial nach einem der vorhergehenden Ansprüche, **dadurch gekennzeichnet, daß** der Träger in Form von Silicamaterial, insbesondere Kieselgel vorliegt.

9. Säule, welche ein Trennmaterial gemäß einem der Ansprüche 1 bis 8 enthält.

10. Verwendung des Trennmaterials nach einem der Ansprüche 1 bis 8 oder der Säule nach Anspruch 9 für die Reinigung von His-Tag-Proteinen.
